# EUROPEAN PATENT SPECIFICATION

(11) **EP 1 867 594 B1**
(45) Date of publication and mention of the grant of the patent: **11.06.2014**
(21) Application number: 06730102.8
(22) Date of filing: 27.03.2006
(51) Int. Cl.: B66B 1/34, B66B 1/06, B66B 5/02

(54) **ELEVATOR SYSTEM AND OPERATION CONTROL METHOD THEREOF**
AUFZUGSSYSTEM UND BETRIEBSSTEUERUNGSVERFAHREN DAFÜR
SYSTEME D'ASCENSEUR ET SON PROCEDE DE COMMANDE

(30) Priority: 07.04.2005 JP 2005111074
(43) Date of publication of application: 19.12.2007
(73) Proprietor: MITSUBISHI ELECTRIC CORPORATION, Chiyoda-ku Tokyo 100-8310 (JP)
(72) Inventor: ENDO, Takamasa c/o Mitsubishi Electric Engineering Company Ltd., Chiyoda-ku Tokyo 102-0073 (JP)
(74) Representative: HOFFMANN EITLE
(86) International application number: PCT/JP2006/306154
(87) International publication number: WO 2006/114968

(56) References cited:
- JP-A- 2001 002 335
- JP-A- 2001 002 335
- JP-A- 2003 146 552
- JP-A- 2003 146 552
- JP-A- 2003 341 955

## Description

### Technical Field

This invention relates to an elevator system and a running control method therefor, in which the reduction of standby electric power is attained, and more particularly to an elevator system and a running control method therefor, according to which when a power source is restored from a state where the power source has been cut off or a state where an energy saving mode has been selected, the elevator system can be utilized after the confirmation of the state of an external input.

### Background Art

There has heretofore been proposed an elevator system wherein, in order to reduce the standby electric power of the elevator system, power feed from an electric power source to a power converter and a controlled power source circuit is cut off during the standby of the elevator system, and in a case where a command to operate the elevator system has been given, electric power is fed to them in interlocking with the command (refer to, for example, Patent Document 1).
Patent Document 2 discloses an elevator apparatus that is capable of reducing the downtime of an elevator due to the occurrence of an earthquake. Thereby, the system distinguishes between different magnitudes of the earthquake. For small and moderate earthquakes, the system is capable of resuming the operation of the elevator system either autonomously or upon external input. Before resuming the normal operation, the system according to Patent Document 2 undergoes several evaluation and waiting steps to ensure that the system was not damaged by the earthquake and is capable of functioning normally.

Patent Document 1: JP-A-2001-2335 (Sector 0028, Fig. 1)
Patent Document 2: JP-A-2003-146552

### Disclosure of the Invention

### Problems that the Invention is to Solve

Although the elevator system disclosed in Patent Document 1 mentioned above can attain energy saving by cutting off the unnecessary power feed in a slack time zone, or the like, an elevator control apparatus is in an initial state at the restoration of a power source from the cutoff thereof because this elevator control apparatus is not fed with electric power during the cutoff of the power source.

Therefore, in a case, for example, where an earthquake occurred during the cutoff of the power source, the elevator control apparatus cannot alter an earthquake sensor having operated by sensing the occurrence of the earthquake, from a set state into a reset state because the elevator control apparatus was not operating during the cutoff of the power source. Even when a user performs the manipulation of a request for the power source restoration in this situation with the intention of using the elevator system, the earthquake sensor is held operating in spite of the lapse of a time period since the occurrence of the earthquake, and hence, the elevator control apparatus selects earthquake control running, resulting in such a problem that the elevator system cannot be immediately used.

Besides, in a case where a fire occurred during the cutoff of the power source, the elevator control apparatus cannot recognize the occurrence of the fire because this elevator control apparatus was not operating during the cutoff of the power source. Accordingly, when a user performs the manipulation of a request for the power source restoration in this situation with the intention of using the elevator system, the elevator control apparatus selects fire control running at that point of time in spite of the lapse of a time period since the occurrence of the fire and the spread of the fire, resulting in such a problem that the elevator control apparatus causes a cage to travel to a refuge floor and opens a door.

This invention has been made in view of the above problems, and it has for its object to provide an elevator system and a running control method therefor, according to which in restoring the power source of the elevator system that is in a state where unnecessary power feed has been cut off in a slack time zone, or the like or in a state where an energy saving mode has been selected, the elevator system can be used after the state of an earthquake sensor operating by sensing an earthquake or a fire control switch operating by recognizing the occurrence of a fire has been confirmed.

### Means for Solving the Problems

An elevator system according to this invention consists, in an elevator system including an elevator control apparatus to which an operation signal of an earthquake sensor operating by sensing an earthquake is inputted, wherein in a case where a command for operating the elevator system exists during cutoff of a power source of the elevator system or during selection of an energy saving mode, the power source of the elevator system is restored by the elevator control apparatus in interlocking with the command; in that, when the elevator control apparatus has received the command for operating the elevator system, in a state where the earthquake sensor has operated during the cutoff of the power source of the elevator system or during the selection of the energy saving mode, it resets the earthquake sensor and controls running of the elevator system.

Besides, a running control method for an elevator system according to this invention consists, in a running control method for an elevator system including an elevator control apparatus to which an operation signal of an earthquake sensor operating by sensing an earthquake is inputted, wherein in a case where a command for operating the elevator system exists during cutoff of a power source of the elevator system or during selection of an energy saving mode, the power source of the elevator system is restored by the elevator control apparatus in interlocking with the command; in comprising a first step of judging if the elevator system is under the cutoff of the power source or under the selection of the energy saving mode; a second step of judging the existence or nonexistence of the command for operating the elevator system, in a case where the elevator system is under the cutoff of the power source or under the selection of the energy saving mode at the first step; a third step of judging existence or nonexistence of the operation of the earthquake sensor, in a case where the command for operating the elevator system exists at the second step; and a fourth step of resetting the earthquake sensor in a case where the earthquake sensor has operated at the third step.

### Advantage of the Invention

According to this invention, reduction in the standby electric power of an elevator system is attained, and besides, in compliance with a request for the restoration of the power source of the elevator system in a state where the power source is cut off or in a state where an energy saving mode is selected, the elevator system is subjected to a running control after the state of an earthquake sensor operating by sensing an earthquake or a fire control switch operating by recognizing the occurrence of a fire has been confirmed, to bring forth the advantages that the elevator system is available immediately in compliance with the request for the power source restoration at the occurrence of the earthquake, and that the running of the elevator system is stopped in compliance with the request for the power source restoration at the occurrence of the fire, so service can be enhanced from the viewpoint of keeping safety.

### Best Mode for Carrying out the Invention

Now, preferred embodiments will be described on an elevator system and a running control method therefor according to this invention, with reference to the accompanying drawings.

### Embodiment 1:

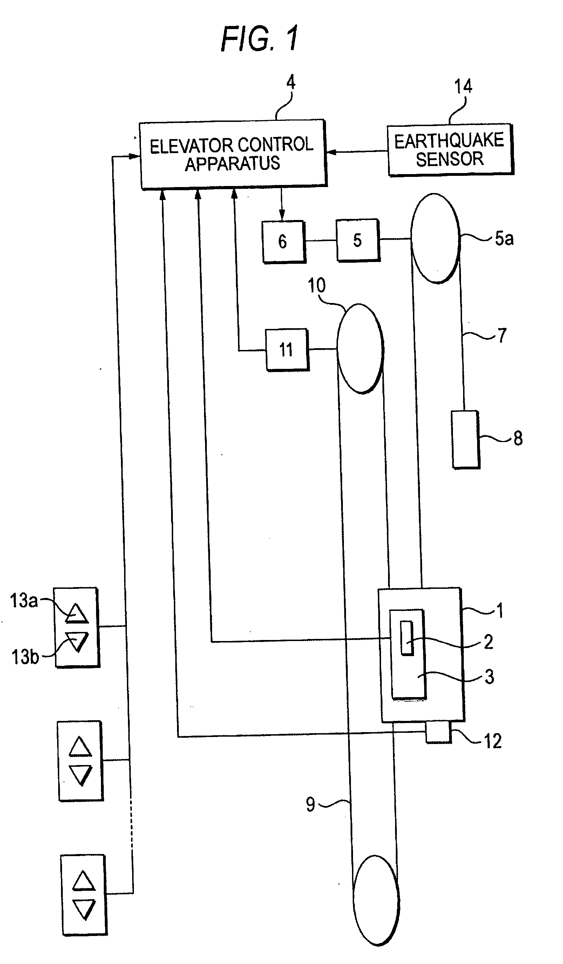

First, the general configuration of an elevator system according to Embodiment 1 of this invention will be described. Fig. 1 is a block diagram showing the general configuration of the elevator system according to Embodiment 1 of this invention. Referring to Fig. 1, a cage 1 which is disposed in vertically movable fashion within a hoistway not shown is provided with a cage manipulation panel 3 in which a cage call button 2 is assembled. A signal which is outputted from the cage manipulation panel 3 is inputted to an elevator control apparatus 4 which is mounted in, for example, a machinery room, and the elevator control apparatus 4 is configured so as to perform the running control of the elevator system on the basis of the inputted signal.

The elevator control apparatus 4 controls through an inverter 6, a winding machine 5 for vertically moving the cage 1. A main rope 7 is extended over the drive sheave 5a of the winding machine 5, and one end of the main rope 7 is secured to the cage 1, while the other end is secured to a counterweight 8.

A governor rope 9 is attached to the cage 1, and this rope 9 is extended over a governor sheave 10. The governor sheave 10 is furnished with a rotary encoder 11 for detecting the position and moving direction of the cage 1, in addition to a governor (not shown). Besides, the cage 1 is provided with passenger-percentage detection means 12 for detecting the passenger percentage of passengers who have gotten in the cage 1. Incidentally, signals which have been outputted from the rotary encoder 11 and the passenger-percentage detection means 12 are inputted to the elevator control apparatus 4 so as to be used for the various controls of the elevator system.

Each floor is furnished with hall call registrationmeans, for example, hall call buttons 13a and 13b in ascent and descent directions, and when a user wants to go to a floor in the ascent direction, he/she manipulates the hall call button 13a in the ascent direction, while when a user wants to go to a floor in the descent direction, he/she manipulates the hall call button 13b in the descent direction. Signals which have been outputted from the hall call button 13a in the ascent direction and the hall call button 13b in the descent direction are inputted to the elevator control apparatus 4, and the elevator control apparatus 4 is configured so as to perform the running control of the elevator system on the basis of the inputted signals. Incidentally, the elevator control apparatus 4 includes a timer unit, and it is configured so that, when the hall call button 13a or 13b is manipulated at any floor, a time period since the manipulation (a wait time) may be measured.

Further, an earthquake sensor 14 which operates by sensing an earthquake is disposed in the desired place of a building where the elevator system is installed. A signal outputted from the earthquake sensor 14 is inputted to the elevator control apparatus 4, and the elevator control apparatus 4 is configured so that the running control of the elevator system may be performed as will be stated later, on the basis of the inputted signal.

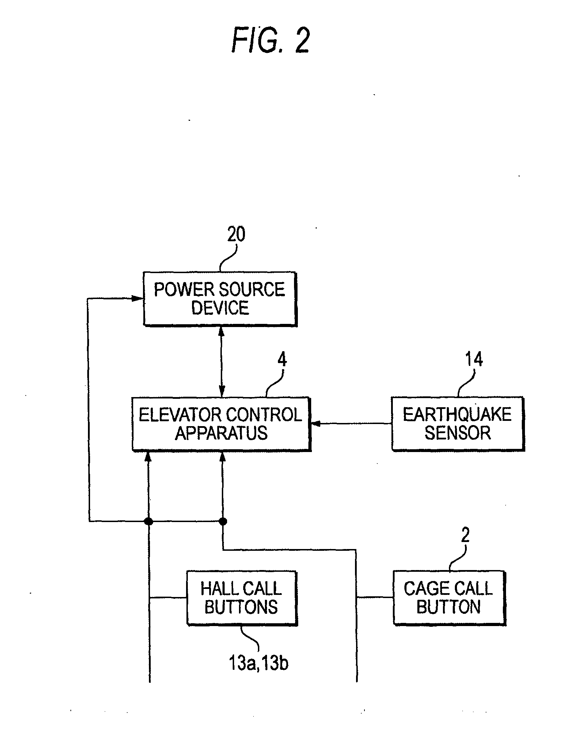

The above is the description on the general configuration of the elevator system according to Embodiment 1, and the elevator control apparatus 4 will nowbe described in conjunction with Fig. 2. More specifically, Fig. 2 is a block diagram for explaining the elevator control apparatus 4 according to Embodiment 1 of this invention.

The elevator control apparatus 4 is supplied with the signal from the cage call button 2 assembled in the cage manipulation panel 3, the signals from the hall call buttons 13a and 13b disposed at each floor, the signal from the earthquake sensor 14, etc. as stated before, and it is configured so as to perform the ascent/descent and stop of the cage 1, the travel control thereof to a refuge floor, etc. on the basis of the signals. Besides, in the elevator system of Embodiment 1, in order to attain energy saving as in an ordinary elevator system, the elevator control apparatus 4 is configured so that, upon detecting a slack time zone, it may reduce standby electric power by instructing a power source device 20 to cut off a power source, thereby to cut off the power source device 20, or by selecting an energy saving mode.

When the user manipulates the cage call button 2 disposed in the cage 1 or the hall call button 13a or 13b disposed at any floor, in order to use the elevator system which is under the cutoff of the power source device 20 or under the selection of the energy saving mode for the purpose of reducing the standby electric power, electric power is fed from the power source device 20 to the elevator control apparatus 4. Thus, the power source is restored, and the elevator control apparatus 4 confirms an input signal from the earthquake sensor 14 so as to judge whether or not the elevator system is in an available state.

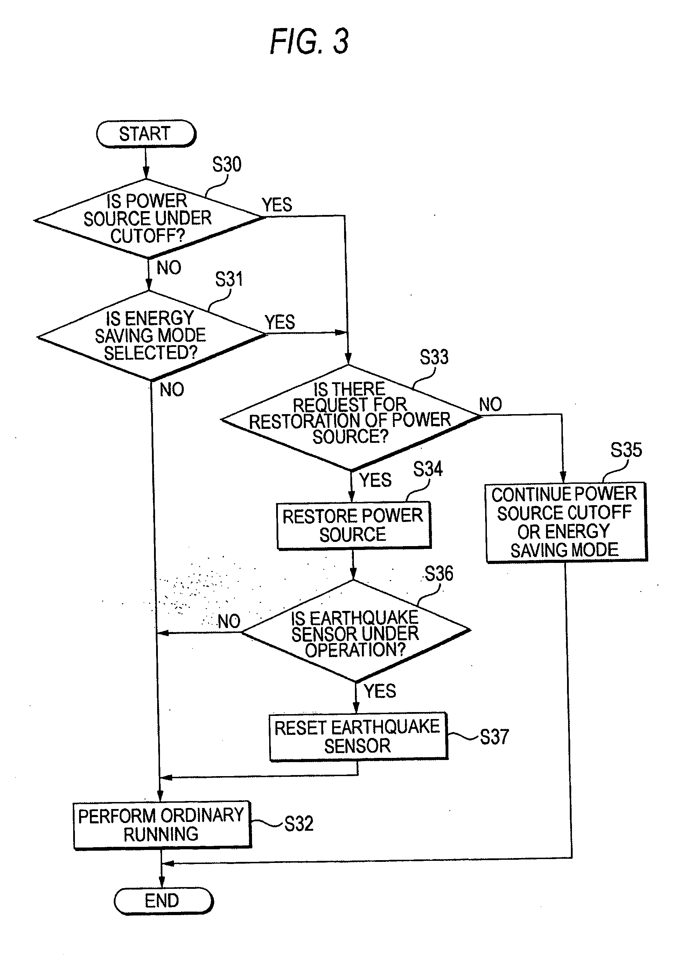

The elevator control apparatus 4 according to Embodiment 1 is configured as stated above, and the operation thereof will nowbe described in conjunction with Fig. 3. More specifically, Fig. 3 is a flow chart for explaining the operation of the elevator control apparatus 4. Referring to Fig. 3, the elevator control apparatus 4 judges whether or not the power source device 20 is under cutoff (step S30). Besides, in a case where the power source device 20 is not under cutoff, the elevator control apparatus 4 judges whether or not the energy saving mode is selected in a slack state (step S31), and in a case where the energy saving mode is not selected, the elevator control apparatus 4 performs ordinary running (step S32).

In a case where the power source device 20 is under cutoff at the step S30, or where the energy saving mode is selected at the step S31, the elevator control apparatus 4 judges whether or not a request for the restoration of the power source is existent, from the hall call button 13a or 13b or the cage call button 2 disposed in the cage 1 (step S33), and in a case where the request for the restoration of the power source is existent, the elevator control apparatus 4 restores the power source (step S34). Besides, in a case where the request for the restoration of the power source is not existent, the elevator control apparatus 4 continues the power source cutoff or continues the energy saving mode (step S35).

When the power source is restored at the step S34, the elevator control apparatus 4 judges whether or not the earthquake sensor 14 is under operation (step S36), and in a case where the earthquake sensor 14 is not under operation, the elevator control apparatus 4 performs the ordinary running at the step S32. Besides, in a case where the earthquake sensor 15 is under operation, the elevator control apparatus 4 resets the earthquake sensor 15 (step S37) and thereafter performs the ordinary running at the step S32.

In this manner, according to Embodiment 1, in a case where an earthquake occurred during the cutoff of the power source or the selection of the energy saving mode of the elevator system and where the earthquake sensor 14 has operated, the earthquake sensor 14 is altered from a set state into a reset state in compliance with the request for the restoration of the power source of the elevator system, whereby the elevator system immediately falls into an available state, and the enhancement of service can be attained.

### Embodiment 2:

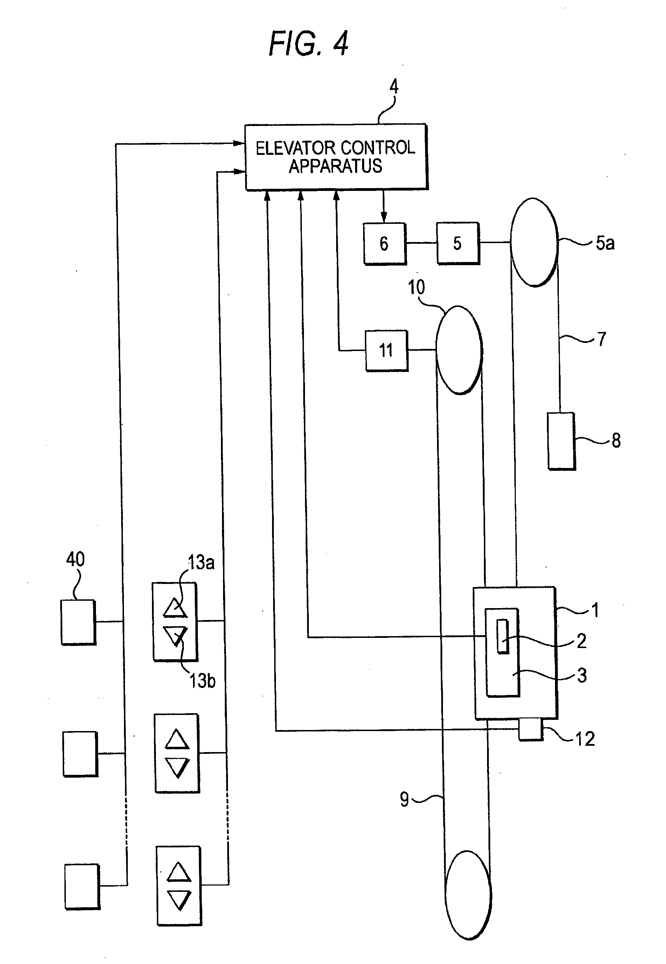

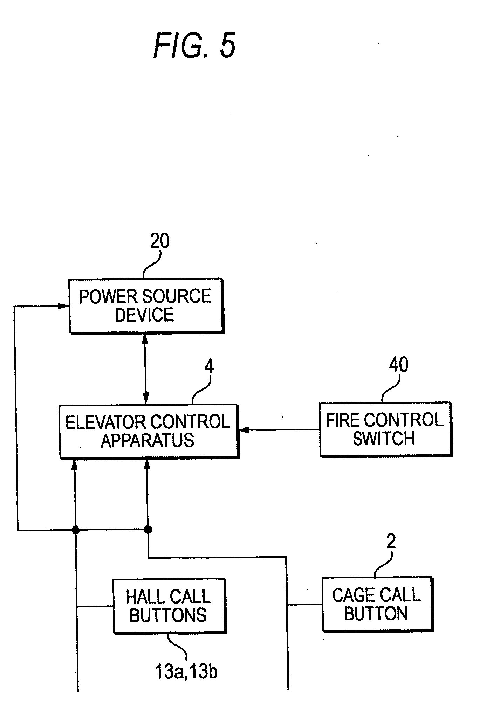

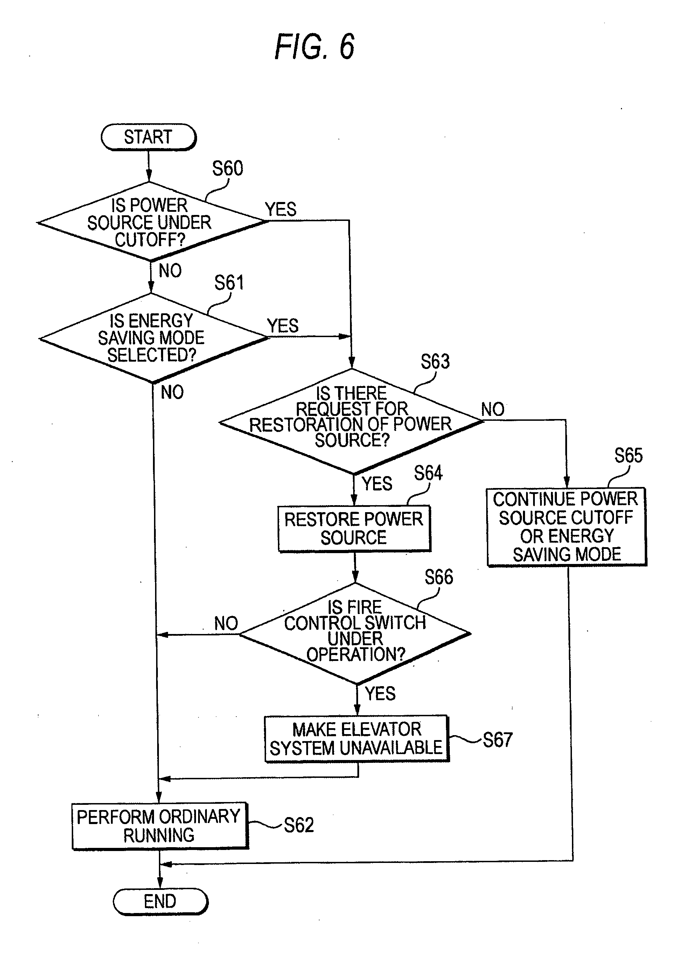

In Embodiment 1, there has been described the practicable example in which, in a case where an earthquake occurred during the cutoff of the power source or the selection of the energy saving mode of an elevator system and where an earthquake sensor 14 has operated, the earthquake sensor 14 is altered from a set state into a reset state in compliance with a request for the restoration of the power source, whereby the elevator system is immediately brought into an available state. In Embodiment 2, a practicable example in the case where a fire occurred during the cutoff of the power source or the selection of the energy saving mode of an elevator system will be described in conjunction with the block diagram of Fig. 4 showing the general configuration of the elevator system, the block diagram of Fig. 5 for explaining an elevator control apparatus, and the flow chart of Fig. 6 for explaining the operation of the elevator system.

More specifically, referring to Fig. 4, a fire control switch 40 which operates by recognizing the occurrence of the fire is mounted in the desired place of each floor. A signal outputted from the fire control switch 40 is inputted to the elevator control apparatus 4, and the elevator control apparatus 4 is configured so as to perform the running control of the elevator system on the basis of the inputted signal. Incidentally, the remaining configuration is similar to that described in Embodiment 1 of Fig. 1, and it shall be omitted from description.

Besides, referring to Fig. 5, the elevator control apparatus 4 is supplied with a signal from a cage call button 2 assembled in a cage manipulation panel 3, signals from hall call buttons 13a and 13b disposed at each floor, the signal from the fire control switch 40, etc., and it is configured so as to perform the ascent/descent and stop control of a cage 1, etc. on the basis of the signals.

Next, the flow chart of Fig. 6 shows the operation of the elevator control apparatus 4 in the case where the fire occurred during the cutoff of the power source or the selection of the energy saving mode of the elevator system according to Embodiment 2. The elevator control apparatus 4 judges whether or not a power source device 20 is under cutoff (step S60). Besides, in a case where the power source device 20 is not under cutoff, the elevator control apparatus 4 judges whether or not the energy saving mode is selected in a slack state (step S61), and in a case where the energy saving mode is not selected, the elevator control apparatus 4 performs ordinary running (step S62).

In a case where the power source is under cutoff at the step S60, or where the energy saving mode is selected at the step S61, the elevator control apparatus 4 judges whether or not a request for the restoration of the power source is existent, from the hall call button 13a or 13b or the cage call button 2 disposed in the cage 1 (step S63), and in a case where the request for the restoration of the power source is existent, the elevator control apparatus 4 restores the power source (step S64). Besides, in a case where the request for the restoration of the power source is not existent, the elevator control apparatus 4 continues the power source cutoff or continues the selection of the energy saving mode (step S65).

When the power source is restored at the step S64, the elevator control apparatus 4 judges if the fire control switch 40 is under operation by recognizing the fire (step S66), and in a case where the fire control switch 40 is not under operation, the elevator control apparatus 4 performs the ordinary running at the step S62. Besides, in a case where the fire control switch 40 is under operation, the elevator control apparatus 4 stops the running of the elevator system (step S67).

In this manner, according to Embodiment 2, in a case where a fire occurred during the cutoff of the power source or the selection of the energy saving mode of the elevator system, a signal from the fire control switch 40 is confirmed in compliance with a request for the restoration of the power source of the elevator system, and subject to the selection of a fire control, the running of the elevator system is stopped without opening even the door of the cage, whereby a person and the cage can be respectively prevented from erroneously getting into the cage and from traveling to a refuge floor by fire control running, in spite of the lapse of a time period since the occurrence of the fire and the spread of the fire, so that the embodiment is preferable for keeping safety.

### Embodiment 3:

In Embodiment 2, there has been described the embodiment in which, in a case where a fire occurred during the cutoff of the power source or the selection of the energy saving mode of an elevator system, the running of the elevator system is stopped even in the existence of a request for the restoration of the power source of the elevator system. Embodiment 3 consists in further improving Embodiment 2 and reporting it to a user that the elevator system is in a running stop state, and the embodiment 3 will be described below.

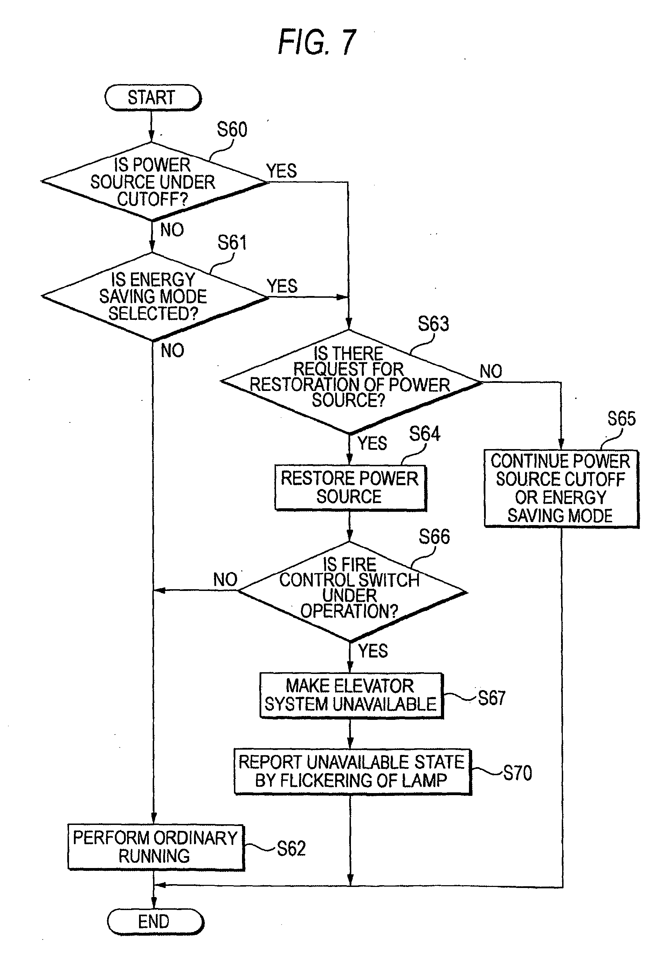

Fig. 7 is a flow chart for explaining the operation of an elevator control apparatus according to Embodiment 3, and the general configuration of the elevator system is the same as in Figs. 4 and 5, so that Embodiment 3 will be described in conjunction with these figures.

In the flow chart of Fig. 7, steps S60 through S67 are the same as in Embodiment 2 in Fig. 6, and hence, they are assigned the same step Nos. and shall be omitted from description. In a case where the running of the elevator system has been stopped at the step S67 in Fig. 7, the running stop state of the elevator system is reported by, for example, turning ON and OFF the lamps of hall call buttons 13a and 13b disposed at each floor (step S70). Thus, the unavailability of the elevator system can be reported to a person intending to use the elevator system, who has manipulated the hall call button 13a or 13b, and the person intending to use the elevator system can recognize the state of the elevator system.

### Embodiment 4:

Now, Embodiment 4 will be described. This embodiment 4 consists in that the respective operations of the elevator control apparatuses in Embodiments 1 through 3 are performed only in compliance with the request for the restoration of the power source from the energy saving mode. More specifically, each of Embodiments 1 through 3 includes both the operations complying with the request for the restoration of the power source from the energy saving mode and with the request for the restoration of the power source during the cutoff of the power source, and it includes also a case where a request for the restoration of the power source from an ordinary stoppage of power supply is existent. In this embodiment 4, however, the elevator control apparatus is operated only in the restricted case where the request for the restoration of the power source from the energy saving mode is existent.

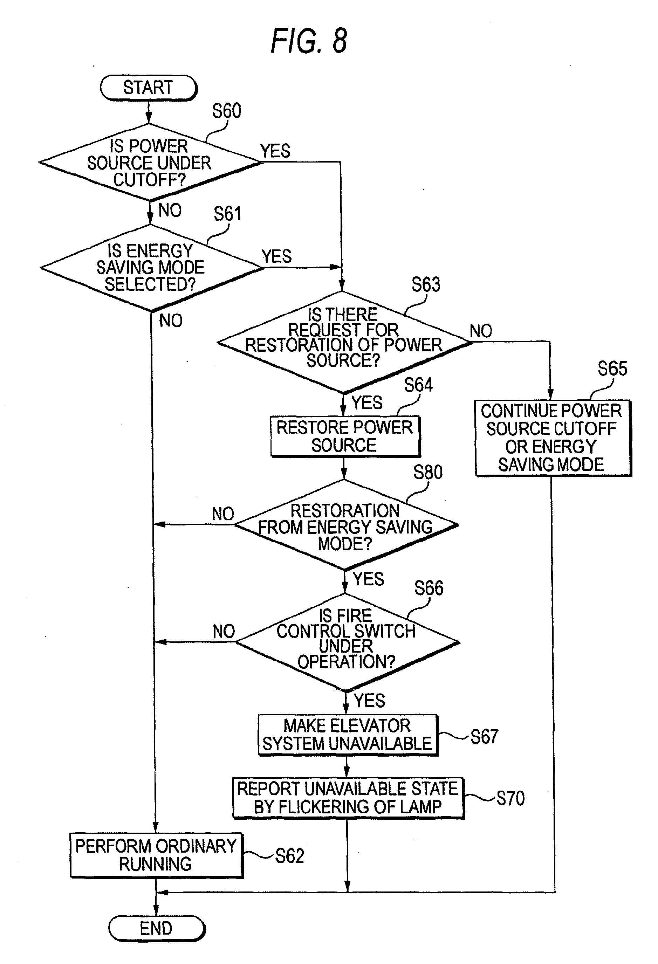

Fig. 8 is a flow chart for explaining the operation of the elevator control apparatus according to Embodiment 4, and the general configuration of the elevator system is the same as in Figs. 4 and 5, so that Embodiment 4 will be described in conjunction with these figures.

More specifically, in the flow chart of Fig. 8, steps S60 through S65, and steps S66, S67 and S70 are the same as explained in the flow chart of Fig. 7 in Embodiment 3, and hence, they are assigned the same step Nos. and shall be omitted from description. In a case where the request for the restoration of the power source is existent at the step S64 in Fig. 8, the elevator control apparatus 4 judges if the pertinent request is the request for the restoration of the power source from the energy saving mode (step S80). Only on the occasion of the request for the restoration from the energy saving mode, the elevator control apparatus 4 is caused to perform the respective operations described in Embodiments 1 through 3, so as to run the elevator system.

The case where the request for the restoration of the power source from the energy saving mode is existent, and the case where the request for the restoration of the power source from the ordinary stoppage of power supply, are distinguished as in Embodiment 4, whereby on the occasion of start-up from the ordinary stoppage of power supply, the operations can be separated without performing such special running in which the state of the fire control switch is checked.

Incidentally, although the above embodiment 4 has been described as the further improvement on Embodiment 3, the idea is, of course, applicable to the occasion of the occurrence of the earthquake in Embodiment 1.

Besides, in the individual embodiments, the case of the occurrence of the earthquake and the case of the occurrence of the fire have been mentioned as the examples, and the cases of the individual occurrences of the earthquake and the fire have been described. It is, of course, considered to configure an elevator system in which the operation signals of both the earthquake sensor and the fire control switch are inputted to an elevator control apparatus by supposing the occurrences of the two, and which is caused to perform the operations of any of the combinations of Embodiments 1 through 4. This invention shall cover various design alterations not departing from the purport thereof.

### Industrial Applicability

As described above, an elevator system and a running control method therefor according to this invention consist in that, in addition to the attainment of reduction in the standby electric power of an elevator system, the elevator system is made available after the state of an earthquake sensor operating by sensing an earthquake or a fire control switch operating by recognizing the occurrence of a fire has been confirmed at the restoration of the power source of the elevator system under the cutoff of the power source or under the selection of an energy saving mode. The elevator system and the running control method therefor become excellent from the viewpoint of enhancing service or keeping safety, and the industrial applicability thereof is great.

### Brief Description of the Drawings

[Fig. 1] It is a block diagram showing the general configuration of an elevator system according to Embodiment 1 of this invention.
[Fig. 2] It is a block diagram for explaining an elevator control apparatus according to Embodiment 1 of this invention.
[Fig. 3] It is a flow chart for explaining the operation of the elevator control apparatus according to Embodiment 1 of this invention.
[Fig. 4] It is a block diagram showing the general configuration of an elevator system according to Embodiment 2 of this invention.
[Fig. 5] It is a block diagram for explaining an elevator control apparatus according to Embodiment 2 of this invention.
[Fig. 6] It is a flow chart for explaining the operation of the elevator system according to Embodiment 2 of this invention.
[Fig. 7] It is a flow chart for explaining the operation of an elevator control apparatus according to Embodiment 3 of this invention.
[Fig. 8] It is a flow chart for explaining the operation of an elevator control apparatus according to Embodiment 4 of this invention.

### Description of Reference Numerals and Signs

- 1: cage
- 2: cage call button
- 3: cage manipulation panel
- 4: elevator control apparatus
- 5: winding machine
- 5a: drive sheave
- 6: inverter
- 7: main rope
- 8: counterweight
- 9: governor rope
- 10: governor sheave
- 11: rotary encoder
- 12: passenger-percentage detection means
- 13a, 13b: hall call buttons
- 14: earthquake sensor
- 20: power source device

## Claims

1. An elevator system comprising an elevator control apparatus (4) to which an operation signal of an earthquake sensor (14) operating by sensing an earthquake is inputted, wherein in a case where a command for operating the elevator system exists during cutoff of a power source of the elevator system or during selection of an energy saving mode, the power source of the elevator system is restored by the elevator control apparatus (4) in interlocking with the command; and
wherein, when said elevator control apparatus (4) has received the command for operating the elevator system, in a state where said earthquake sensor (14) has operated during the cutoff of the power source of the elevator system or during the selection of the energy saving mode, it resets said earthquake sensor (14) and controls running of the elevator system.

2. An elevator system comprising an elevator control apparatus (4) to which an operation signal of a fire control switch (40) operating by recognizing occurrence of a fire is inputted, wherein in a case where a command for operating the elevator system exists during cutoff of a power source of the elevator system or during selection of an energy saving mode, the power source of the elevator system is restored by the elevator control apparatus (4) in interlocking with the command; and
wherein, when said elevator control apparatus (4) has received the command for operating the elevator system, in a state where said fire control switch (40) has operated during the cutoff of the power source of the elevator system or during the selection of the energy saving mode, it stops running of the elevator system.

3. An elevator system as defined in claim 2, further comprising means for reporting the running stop of the elevator system to a user when said elevator control apparatus (4) has received the command for operating the elevator system, in the state where said fire control switch has operated.

4. A running control method for an elevator system including an elevator control apparatus (4) to which an operation signal of an earthquake sensor (14) operating by sensing an earthquake is inputted, wherein in a case where a command for operating the elevator system exists during cutoff of a power source of the elevator system or during selection of an energy saving mode, the power source of the elevator system is restored by the elevator control apparatus (4) in interlocking with the command;
the running control method for an elevator system comprising:
a first step of judging if the elevator system is under the cutoff of the power source or under the selection of the energy saving mode;
a second step of judging the existence or nonexistence of the command for operating the elevator system, in a case where the elevator system is under the cutoff of the power source or under the selection of the energy saving mode at said first step;
a third step of judging existence or nonexistence of the operation of the earthquake sensor (14), in a case where the command for operating the elevator system exists at said second step; and
a fourth step of resetting the earthquake sensor in a case where the earthquake sensor has operated at said third step.

5. A running control method for an elevator system including an elevator control apparatus (4) to which an operation signal of a fire control switch (40) operating by recognizing occurrence of a fire is inputted, wherein in a case where a command for operating the elevator system exists during cutoff of a power source of the elevator system or during selection of an energy saving mode, the power source of the elevator system is restored by the elevator control apparatus (4) in interlocking with the command;
the running control method for an elevator system comprising:
a first step of judging if the elevator system is under the cutoff of the power source or under the selection of the energy saving mode;
a second step of judging the existence or nonexistence of the command for operating the elevator system, in a case where the elevator system is under the cutoff of the power source or under the selection of the energy saving mode at said first step;
a third step of judging existence or nonexistence of the operation of the fire control switch (40) in a case where the command for operating the elevator system exists at said second step; and
a fourth step of stopping running of the elevator system in a case where the fire control switch has operated at said third step.

6. A running control method for an elevator system as defined in claim 5, **characterized by** comprising a step of reporting the running stop of the elevator system to a user in the case where the fire control switch has operated.

## Patentansprüche

1. Aufzugssystem mit einer Aufzugssteuerungsvorrichtung (4), in die ein Betriebssignal von einem Erdbebensensor (14) eingegeben ist, der durch Erfassen eines Erdbebens tätig wird, wobei, falls ein Befehl zum Betreiben des Aufzugssystems besteht, während eine Energiequelle des Aufzugssystems abgesperrt ist, oder während ein Energiesparmodus ausgewählt ist, die Energiequelle des Aufzugssystems durch die Aufzugssteuerungsvorrichtung (4) in Abhängigkeit von dem Befehl wiederhergestellt wird; und
wobei die Aufzugssteuerungsvorrichtung (4) den Erdbebensensor (14) resettet und den Betrieb des Aufzugssystems steuert, wenn sie den Befehl zum Betreiben des Aufzugssystems in einem Zustand erhalten hat, in dem der Erdbebensensor (14) während des Absperrens der Energiequelle des Aufzugssystems oder während der Auswahl des Energiesparmodus tätig wurde.

2. Aufzugssystem mit einer Aufzugssteuerungsvorrichtung (4), in die ein Betriebssignal von einem Feuerkontrollschalter (40) eingegeben ist, der durch Erfassen des Auftretens eines Feuers tätig wird, wobei, falls ein Befehl zum Betreiben des Aufzugssystems besteht, während eine Energiequelle des Aufzugssystems abgesperrt ist, oder während ein Energiesparmodus ausgewählt ist, die Energiequelle des Aufzugssystems durch die Aufzugssteuerungsvorrichtung (4) in Abhängigkeit von dem Befehl wiederhergestellt wird; und
wobei die Aufzugssteuerungsvorrichtung (4) den Betrieb des Aufzugssystems anhält, wenn sie den Befehl zum Betreiben des Aufzugsystems in einem Zustand erhalten hat, in dem der Feuerkontrollschalter (40) während des Absperrens der Energiequelle des Aufzugssystems oder während der Auswahl des Energiesparmodus tätig wurde.

3. Aufzugssystem nach Anspruch 2, ferner mit Einrichtungen zum Anzeigen des Anhaltens des Betriebs des Aufzugssystems an einen Benutzer, wenn die Aufzugssteuerungsvorrichtung (4) den Befehl zum Betreiben des Aufzugssystems in dem Zustand erhalten hat, in dem der Feuerkontrollschalter tätig wurde.

4. Betriebssteuerungsverfahren für ein Aufzugssystem mit einer Aufzugssteuerungsvorrichtung (4), in die ein Betriebssignal von einem Erdbebensensor (14) eingegeben ist, der der durch Erfassen eines Erdbebens tätig wird, wobei,
falls ein Befehl zum Betreiben des Aufzugssystems besteht, während eine Energiequelle des Aufzugssystems abgesperrt ist, oder während ein Energiesparmodus ausgewählt ist, die Energiequelle des Aufzugssystems durch die Aufzugssteuerungsvorrichtung (4) in Abhängigkeit von dem Befehl wiederhergestellt wird;
wobei das Betriebssteuerungsverfahren für ein Aufzugssystem umfasst:
einen ersten Schritt des Beurteilens, ob das Aufzugssystem der Absperrung der Energiequelle oder der Auswahl des Energiesparmodus unterliegt;
einen zweiten Schritt des Beurteilens des Bestehens oder
nicht-Bestehens des Befehls das Aufzugssystem zu betreiben,
falls das Aufzugssystem gemäß dem ersten Schritt der Absperrung der Energiequelle oder der Auswahl des Energiesparmodus unterliegt;
einen dritten Schritt des Beurteilens des Bestehens oder
nicht-Bestehens der Betätigung des Erdbebensensors (14), falls gemäß dem zweiten Schritt der Befehl zum Betreiben des Aufzugssystems besteht; und
einen vierten Schritt des Resettens des Erdbebensensors, falls gemäß dem dritten Schritt der Erdbebensensor tätig wurde.

5. Betriebssteuerungsverfahren für ein Aufzugssystem mit einer Aufzugssteuerungsvorrichtung (4), in die ein Betriebssignal von einem Feuerkontrollschalter (40) eingegeben ist, der durch Erfassen des Auftretens eines Feuers tätig wird, wobei, falls ein Befehl zum Betreiben des Aufzugssystems besteht, während eine Energiequelle des Aufzugssystems abgesperrt ist, oder während ein Energiesparmodus ausgewählt ist, die Energiequelle des Aufzugssystems durch die Aufzugssteuerungsvorrichtung (4) in Abhängigkeit von dem Befehl wiederhergestellt wird;
wobei das Betriebssteuerungsverfahren für ein Aufzugssystem umfasst:
einen ersten Schritt des Beurteilens, ob das Aufzugssystem der Absperrung der Energiequelle oder der Auswahl des Energiesparmodus unterliegt;
einen zweiten Schritt des Beurteilens des Bestehens oder
nicht-Bestehens des Befehls das Aufzugssystem zu betreiben,
falls das Aufzugssystem gemäß dem ersten Schritt der Absperrung der Energiequelle oder der Auswahl des Energiesparmodus unterliegt;
einen dritten Schritt des Beurteilens des Bestehens oder
nicht-Bestehens der Betätigung des Feuerkontrollschalters (40),
falls gemäß dem zweiten Schritt der Befehl zum Betreiben des Aufzugssystems besteht; und
einen vierten Schritt des Anhaltens des Betriebs des Aufzugssystems, falls gemäß dem dritten Schritt der Feuerkontrollschalter tätig wurde.

6. Betriebssteuerungsverfahren für ein Aufzugssystem nach Anspruch 5, **dadurch gekennzeichnet, dass** es einen Schritt des Anzeigens des Anhaltens des Betriebs des Aufzugssystems an einen Benutzer aufweist, falls der Feuerkontrollschalter tätig wurde.

## Revendications

1. Système d'ascenseur comprenant un appareil de commande de l'ascenseur (4) auquel un signal de fonctionnement d'un détecteur de tremblement de terre (14) fonctionnant par détection d'un tremblement de terre est appliqué en entrée, dans lequel, dans un cas où une instruction pour faire fonctionner le système d'ascenseur existe lors d'une coupure d'une source d'alimentation du système d'ascenseur ou pendant la sélection d'un mode d'économie d'énergie, la source d'alimentation du système d'ascenseur est rétablie par l'appareil de commande de l'ascenseur (4) en interverrouillage avec l'instruction, et
dans lequel, lorsque l'appareil de commande de l'ascenseur (4) a reçu l'instruction pour le fonctionnement du système d'ascenseur, dans un état dans lequel ledit détecteur de tremblement de terre (14) a fonctionné lors de la coupure de la source d'alimentation du système d'ascenseur ou au cours de la sélection du mode d'économie d'énergie, il réinitialise ledit détecteur de tremblement de terre (14) et commande le fonctionnement du système d'ascenseur.

2. Système d'ascenseur comprenant un appareil de commande de l'ascenseur (4) auquel un signal d'actionnement d'un commutateur de contrôle d'incendie (40) fonctionnant par reconnaissance de la survenue d'un incendie est appliqué en entrée, dans lequel, dans un cas où une instruction pour faire fonctionner le système d'ascenseur existe lors de coupure d'une source d'alimentation du système d'ascenseur ou pendant la sélection d'un mode d'économie d'énergie, la source d'alimentation du système d'ascenseur est rétablie par l'appareil de commande de l'ascenseur (4) en interverrouillage avec l'instruction, et
dans lequel, lorsque l'appareil de commande de l'ascenseur (4) a reçu l'instruction pour le fonctionnement du système d'ascenseur, dans un état dans lequel ledit commutateur de contrôle d'incendie (40) a fonctionné lors de la coupure de la source d'alimentation du système d'ascenseur ou au cours de la sélection du mode d'économie d'énergie, il arrête le fonctionnement du système d'ascenseur.

3. Système d'ascenseur selon la revendication 2, comprenant en outre des moyens pour signaler l'arrêt de fonctionnement du système d'ascenseur à un utilisateur lorsque ledit dispositif de commande de l'ascenseur (4) a reçu l'instruction pour le fonctionnement du système d'ascenseur, dans l'état où ledit commutateur de contrôle d'incendie a fonctionné.

4. Procédé de commande de fonctionnement pour un système d'ascenseur comprenant un appareil de commande de l'ascenseur (4) auquel un signal de fonctionnement d'un détecteur de tremblement de terre (14) fonctionnant par détection d'un tremblement de terre est appliqué en entrée, dans lequel, dans un cas où une instruction pour faire fonctionner le système d'ascenseur existe lors de coupure d'une source d'alimentation du système d'ascenseur ou pendant la sélection d'un mode d'économie d'énergie, la source d'alimentation du système d'ascenseur est rétablie par l'appareil de commande de l'ascenseur (4) en interverrouillage avec l'instruction,
le procédé de commande de fonctionnement pour un système d'ascenseur, comprenant :
une première étape consistant à déterminer si le système d'ascenseur est sous la coupure de la source d'alimentation ou sous la sélection du mode d'économie d'énergie,
une deuxième étape consistant à déterminer l'existence ou la non-existence de l'instruction pour faire fonctionner le système d'ascenseur, dans le cas où le système d'ascenseur est sous la coupure de la source d'alimentation ou sous la sélection du mode d'économie d'énergie à ladite première étape,
une troisième étape consistant à déterminer l'existence ou la non-existence du fonctionnement du détecteur de tremblement de terre, dans un cas où l'instruction pour faire fonctionner le système d'ascenseur existe à ladite deuxième étape, et
une quatrième étape consistant à réinitialiser le détecteur de tremblement de terre, dans un cas où le détecteur de tremblement de terre a fonctionné à ladite troisième étape.

5. Procédé de commande de fonctionnement pour un système d'ascenseur comprenant un appareil de commande de l'ascenseur (4) auquel un signal d'actionnement d'un commutateur de contrôle d'incendie (40) fonctionnant par reconnaissance de la survenue d'un incendie est appliqué en entrée, dans lequel, dans le cas où une instruction pour faire fonctionner le système d'ascenseur existe lors de coupure d'une source d'alimentation du système d'ascenseur ou pendant la sélection d'un mode d'économie d'énergie, la source d'alimentation du système d'ascenseur est rétablie par l'appareil de commande de l'ascenseur (4) en interverrouillage avec l'instruction,
le procédé de commande de fonctionnement pour un système d'ascenseur comprenant :
une première étape consistant à déterminer si le système d'ascenseur est sous la coupure de la source d'alimentation ou sous la sélection du mode d'économie d'énergie,
une deuxième étape consistant à déterminer l'existence ou la non-existence de l'instruction pour faire fonctionner le système d'ascenseur, dans le cas où le système d'ascenseur est sous la coupure de la source d'alimentation ou sous la sélection du mode d'économie d'énergie à ladite première étape,
une troisième étape consistant à déterminer l'existence ou non-existence du fonctionnement du commutateur de contrôle d'incendie (40), dans un cas où l'instruction pour faire fonctionner le système d'ascenseur existe à ladite deuxième étape, et
une quatrième étape consistant à arrêter le fonctionnement du système de l'ascenseur dans le cas où le commutateur de contrôle d'incendie a fonctionné à ladite troisième étape.

6. Procédé de commande de fonctionnement pour un système d'ascenseur selon la revendication 5, **caractérisé en ce qu'**il comprend l'étape consistant à signaler l'arrêt de fonctionnement du système d'ascenseur à un utilisateur dans le cas où le commutateur de contrôle d'incendie a fonctionné.
